# EUROPEAN PATENT SPECIFICATION

(11) **EP 3 034 519 B1**
(45) Date of publication and mention of the grant of the patent: **18.07.2018**
(21) Application number: 14198429.4
(22) Date of filing: 17.12.2014
(51) Int. Cl.: C08F 2/34, C08F 2/00, C08F 10/00, C08F 210/06

(54) **Improved gas phase process for the polymerization of olefins**
Verbessertes Gasphasenverfahren zur Polymerisierung von Olefinen
Procédé en phase gazeuse amélioré pour la polymérisation d'oléfines

(43) Date of publication of application: 22.06.2016
(73) Proprietor: Basell Poliolefine Italia S.r.l., 20121 Milano (IT)
(72) Inventor: Ferrari, Paolo, 44122 Ferrara (IT); Mingozzi, Ines, 44122 Ferrara (IT); Tartari, Davide, 44122 Ferrara (IT)
(74) Representative: Colucci, Giuseppe

(56) References cited:
- EP-A1- 1 308 464
- WO-A1-99/61486

## Description

### FIELD OF THE INVENTION

The present disclosure relates to an improved gas-phase process for the polymerization of olefins carried out in a reactor comprising a zone where the polymer particles flow downward in packed mode so as to form a densified polymer bed. A relevant problem to be overcome in a gas-phase polymerization process is the formation of polymer agglomerates, which can build up in various places, such as the polymerization reactor and the lines for recycling the gaseous stream. When polymer agglomerates are originated within the polymerization reactor, there can be many adverse effects. For example, the agglomerates can disrupt the removal of polymer from the polymerization reactor by plugging the polymer discharge valves. Further, if the agglomerates fall and cover part of the fluidization grid a loss of fluidization efficiency may occur. This can result in the formation of larger agglomerates which can lead to the shutdown of the reactor.

### BACKGROUND OF THE INVENTION

It has been found that agglomerates may be also formed as a result of the presence of very fine polymer particles in the polymerization medium. Such fine particles may be present as a result of introducing fine catalyst particles or breakage of the catalyst within the polymerization medium. Fine particles are believed to deposit onto, and electrostatically adhere to the inner walls of the polymerization reactor and the associated equipment for recycling the gaseous stream such as, for example, the heat exchanger. If fine particles remain active in the absence of heat removal, they will grow in size resulting in the formation of agglomerates, also caused by the partial melting of the polymer itself. Such agglomerates, when formed within the polymerization reactor, tend to be in the form of sheets. Agglomerates can also partially plug the heat exchanger designed to remove the heat of polymerization reaction.

### SUMMARY OF THE INVENTION

Several solutions have been proposed to solve the problem of formation of agglomerates during a gas-phase polymerization process. Proposed solutions include deactivation of fine polymer particles, control of catalyst activity and reduction of electrostatic charges by using anti-static agents. In fact electrostatic charges can cause agglomeration of fine particles, nuisance discharges and even explosions. Net particle charge densities in gas-solids fluidized beds and transport lines can be measured by withdrawing a small amount of charged particles from the fluidized bed into Faraday cages, capacitance probes or other devices. Also, these devices allow to test the effectiveness of anti-static agents possibly added to the gas phase reactors by observing the variation of the electrostatic signal over time, which provides information on charge dissipation.

Gas-phase olefin polymerization processes have been developed that comprise a densified bed or settled bed polymerization zone. An example of such processes is disclosed in EP 782587 A1 and EP 1012195 A1. The polymerization process is carried out in a gas-phase reactor having interconnected polymerization zones, where the growing polymer particles flow through a first polymerization zone (so called "riser") under fast fluidization or transport conditions, leave the riser and enter a second polymerization zone (so called "downcomer") through which they flow in a densified form under the action of gravity, leave the downcomer and are reintroduced into the riser, thus establishing a circulation of polymer between the two polymerization zones.

Like other gas-phase olefin polymerization processes, those including a densified/settled bed polymerization zone may suffer from the typical drawbacks correlated to the formation of polymer agglomerates, due to the presence of electrostatic charges within the polymerization apparatus. Actually, a tendency to formation of polymer agglomerates has been observed, especially in the densified bed polymerization zone. In fact, along the densified bed polymerization zone the polymer particles flow downward in a densified form in packed mode, and this condition favors the formation of agglomerates as it is more difficult to remove the polymerization heat due to the limited heat transfer available. The polymer agglomerates can quickly plug the polymer discharge equipment placed at the bottom part of the densified bed polymerization zone.

WO 2011/029735 and WO 2014/044544 disclose a process for the gas-phase polymerization of olefins performed in a reactor with interconnected polymerization zones (downcomer and riser) as mentioned above, in which an antistatic agent is fed to the reactor. The antistatic agent is selected from several classes of compounds, including alkyldiethanolamines, polyepoxidated oils, polyalcohols, hydroxyesters with at least two free hydroxyl groups, amides, fatty acid soaps, salts of sulfuric acid esters of higher alcohols, salts of sulfonic acids, salts of dialkylsulfosuccinic acids, salts of partial esters of higher alcohols with phosphoric acid, salts of primary amines, compounds of the alkylaminesulfonic acid type.

EP 2516489 A1 discloses a gas-phase polymerization process having multiple flow regimes which involves the use of a mixed external donor feed. This electron donor feed includes an activity limiting agent (ALA) and a selectivity control agent (SCA). The SCA may be selected from a group consisting of several classes of compounds, including an alkoxysilane, which in turn is defined by a general formula encompassing a very large number of compounds. The ALA may be selected from a group consisting of several classes of compounds, including a carboxylic acid ester, which in turn may be selected from a very large number of compounds. One of such compounds is (poly)(ethylene glycol) laurate.

WO 03/033543 A1 discloses a process for the gas-phase polymerization of olefins in a fluidized bed reactor. To reduce fouling of the reactor the polymerization is carried out in the presence of a process aid additive comprising at least one component selected from a glycerol ester of a fatty acid, a sorbitan ester of a fatty acid and an alkylamine carboxylate, along with at least one component selected from hydrogen peroxide and/or water and a salt. The sorbitan ester of a fatty acid is in turn selected from several compounds, including sorbitan monolaurate. Process aid additives used in the examples are glycerol monostearate (Atmer 129®), sorbitan polyoxyethylene (Atmer 110®) and glycerol monooleate (Mazol GMO®).
WO99/61486 **discloses a catalyst delivery method for introducing a supported bulky ligand metallocene-type catalyst system to a reactor for polymerizing one or more olefin(s). In particular, it provides for a method of introducing a supported metallocene-type catalyst system into a polymerization reactor by and in the presence of a carrier solution of an antistatic agent and a liquid diluent.**

Certain additives used in polymerization processes performed in fluidized bed reactors to reduce fouling may not be effective in gas-phase reactors that comprise a densified bed polymerization zone. As mentioned above, this flow of particles in a densified form promotes the formation of agglomerates since it is more difficult to remove the polymerization heat due to the limited heat transfer available.

Also, certain antistatic additives used in olefin polymerization processes impose limitations in the end use of the olefin polymer. For example, use of additives based on ethoxylated alkyl amine (e.g. Atmer 163®) is forbidden when the polyolefin is for medical use. Other antistatic additives may cause the formation of undesired odor during fabrication processes that transform olefin polymers into useful products. For example, esters of fatty acids with glycerol (e.g. GMS 90®) cause the formation of acrolein during extrusion of the olefin polymer. Acrolein is irritant and has a pungent and suffocating odor. Still other additives such as the nonionic surfactants based on polyethylene glycol cycloalkyl or alkylphenyl ethers (Triton X-100® or Triton N-101®) are effective antistatic agents but are very viscous substances difficult to be dispersed in a hydrocarbon diluent or solvent. Therefore those additives cannot be easily metered and fed to gas-phase reactors. Furthermore, those additives significantly inhibit the catalyst activity.

There is therefore a need to improve gas-phase polymerization processes comprising a densified bed polymerization zone so as to optimize the effect of neutralizing the electrostatic charges in this particular type of gas-phase polymerization reactor.

Thus, according to a first aspect, the present invention provides a process for producing olefin polymers comprising the steps of:
a) polymerizing one or more olefins in the presence of an olefin polymerization catalyst in a gas phase reactor comprising a densified bed polymerization zone; and
b) introducing into the reactor an antistatic agent being an ester of a fatty acid with a polyol selected from the group consisting of **erythritan, threitan, sorbitan, where** the gas phase reactor **has** interconnected polymerization zones, wherein the growing polymer particles flow through a first polymerization zone under fast fluidization or transport conditions and enter a second polymerization zone through which the polymer particles flow in a densified form under the action of gravity, thus establishing a circulation of polymer between the first and second polymerization zone.

In the present description "fatty acid" means an aliphatic long chain carboxylic acid, either saturated or unsaturated, the former being preferred. According to an embodiment, for "long chain" it is intended from 4 to 28 carbon atoms. According to another embodiment, for "long chain" it is intended from 12 to 22 carbon atoms.

Preferred saturated fatty acids are lauric acid, myristic acid, palmitic acid, stearic acid.

Preferred unsaturated fatty acids is oleic acid.

In a preferred embodiment the antistatic agent is the ester of a saturated fatty acid with sorbitan. In a more preferred embodiment the antistatic agent is a monoester of a saturated fatty acid with sorbitan. In a still more preferred embodiment the antistatic agent is sorbitan monolaurate.

In the present description the ester of a saturated fatty acid with a polyol as defined above is interchangeably designated also as the "fatty acid ester" or the "antistatic agent".

The ester of a fatty acid with a polyol as defined above, when used in the polymerization process according to the present invention, performs the function of an antistatic agent.

The term "antistatic agent" is used in the present description to designate a substance capable of neutralizing and/or dissipating the electrostatic charges of the polymer particles without substantially inhibiting the overall polymerization activity.

Consequently, an "antistatic agent" according to the invention is a substance that is capable to prevent, eliminate or substantially reduce the formation of polymer build-up on any equipment of the polymerization plant, including sheeting of reactor walls, or deposits of polymer agglomerates onto any line of the polymerization plant, including the gas recycle line.

According to the present invention, the polyol-fatty acid ester antistatic agent is added to the polymerization process neat or diluted in a hydrocarbon solvent or diluent, which is useful to improve its dispersion. Suitable hydrocarbon solvents or diluents are isopentane, isohexane, n-hexane, cyclohexane, heptane. A preferred solvent is n-hexane, particularly when sorbitan laurate is used since sorbitan laurate has a good solubility in n-hexane.

When a solvent or diluent is employed, the amount of antistatic agent in the solution or dispersion ranges from 2% to 60 % by weigh, preferably from 4% to 40 % by weigh, based on the amount of antistatic and of solvent or diluent.

The antistatic agent is generally added to the polymerization process in a total amount ranging from 5 to 10000 ppm, based on the weight of polyolefin produced. Use of lower amounts will be less effective in preventing the polymer buildup, while use of larger amounts will adversely affect the operation of the reactor, more specifically the catalyst activity. Preferred amounts of the antistatic agent are within the range from 10 to 5000 ppm, based on the weight of polyolefin produced. More preferred amounts of the antistatic agent are within the range from 50 to 1000 ppm, based on the weight of polyolefin produced.

Most sugar alcohols, dehydrated sugar alcohols and monosaccharides are approved for use in cosmetic, food and pharmaceutical applications. Consequently, a substantial amount of toxicity data and health safety information exists for such compounds, which allows to rank those compounds as having no toxicity or have low orders of toxicity.

Sorbitan fatty acid esters are non-ionic surfactants that find use as emulsifiers, stabilizers and thickeners in foods, cosmetics, medical products, lubricants and other applications. History with these applications provides evidence that sorbitan fatty acid esters may not represent a health safety concern. Sorbitan fatty acid esters are synthesized from naturally occurring substances and the parent esters can undergo metabolism (via enzymatic hydrolysis) back to these same natural constituents, namely, sorbitol and fatty acids, both of which have low orders of toxicity. Sorbitol (CAS 50-70-4) is listed in the FDA/CSFAN database as an indirect food additive. Naturally occurring fatty acids like lauric, myristic, stearic acids may have very low orders of toxicity.

The structures of some sorbitan esters considered representative of the commercial product are given below.

### Sorbitan, monolaurate

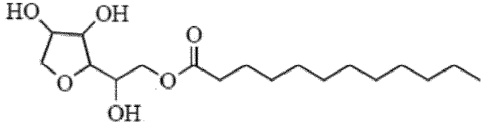

### Sorbitan, monostearate

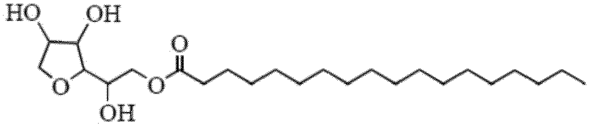

### Sorbitan, monomyristate

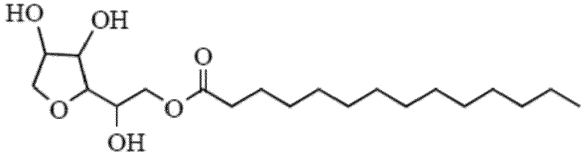

In the process of the present invention the growing polymer particles flowing downward into the reactor in a densified form in the densified bed reach high values of density of the solid, these values approaching the bulk density of the polymer.

The "poured bulk density" of a polymer can be measured according to ASTM D1895/69. The density of solids inside the reactor is defined as mass of polymer per volume of reactor occupied by the polymer.

In the present specification the term "densified form" of polymer means that the ratio between the mass of polymer and the reactor volume is higher than 80% of the "poured bulk density" of the obtained polymer. Thus, for instance, in case of a polymer bulk density equal to 420 kg/m³, a "densified form" of the polymer implies that the polymer mass/reactor volume ratio is of at least 336 kg/m³.

The operating parameters, such as temperature and pressure, are those customarily adopted in a gas-phase catalytic polymerization process. The temperature can be comprised between 60°C and 120°C, while the pressure can range from 5 to 50 bar.

According to an embodiment, one or more alpha olefins are polymerized in a gas-phase reactor having two interconnected polymerization zones, the first polymerization zone (the riser) comprising polymer particles flowing upward under fast fluidization or transport conditions, the second polymerization zone (the downcomer), comprising polymer particles flowing downward in densified form under the action of gravity so as to form a densified polymer bed.

Fast fluidization conditions inside the riser are established by feeding a gas mixture comprising one or more alpha-olefins at a velocity higher than the transport velocity of the polymer particles. The velocity of the gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidisation Technology, page 155 et seq., J. Wiley & Sons Ltd., 1986".

In the downcomer the polymer particles flow under the action of gravity in a densified form, so that the density of the solid inside this polymerization zone approaches the bulk density of the polymer.

It has been observed that by feeding a fatty acid ester as defined above as an antistatic agent, besides being effective in reducing the formation of polymer sheeting and polymer agglomerates along the entire downcomer, the values of the "skin" temperature are kept under control, wherein for "skin" temperature it is intended the temperature measured on the external surface of the reactor. High values of such "skin" or wall temperature indicate a stagnant area where the growing polymer can, and generally will, grow into lumps, thus jeopardizing the operation of the reactor.

According to an embodiment, the growing polymer particles in the densified bed polymerization zone flow along a cylindrically shaped downward provided with a restriction positioned at a distance of about 15% of the total height of the densified bed from the bottom of the bed. In that embodiment the fatty acid ester can be introduced in the reactor at a point above the restriction in the densified bed of downward-flowing polymer particles.

To introduce the fatty acid ester into the gas-phase reactor defined above, a stream of a gas, designated as the "dosing gas", can be fed into the lower part of the densified bed by means of a feed line placed at a short distance above the restriction described above. For "short distance" it is intended a distance that is generally up to 1.5 times, preferably comprised between 0.6 and 1.3 times, more preferably between 0.7 and 1.0 times, the diameter of the section of the densified bed above the restriction.

The feed line for metering the antistatic agent and the feed line for metering the dosing gas can suitably be coincident, thus implying the metering of both fluids through a single line.

Other additional feed lines of the antistatic agent may be arranged according to the process of the invention. Particularly, in a polymerization reactor having two interconnected polymerization zones the additional feeds of antistatic agent may suitably be arranged along the downcomer, on the line for feeding the catalyst system to the riser and/or along the line that continuously recycles the gas monomers to the polymerization reactor.

The polymerization process of the invention can be carried out upstream or downstream other conventional polymerization technologies (either in a liquid-phase or a gas-phase), giving rise to a sequential multistage polymerization process. For instance, a fluidized bed reactor can be used to prepare a first polymer component, which is successively fed to the gas-phase reactor having two interconnected polymerization zones to prepare a second and a third polymer component. Accordingly, an olefin polymer endowed with a multi-modal molecular weight distribution can be obtained, as well as an olefin copolymer comprising two or more components having a different comonomer content.

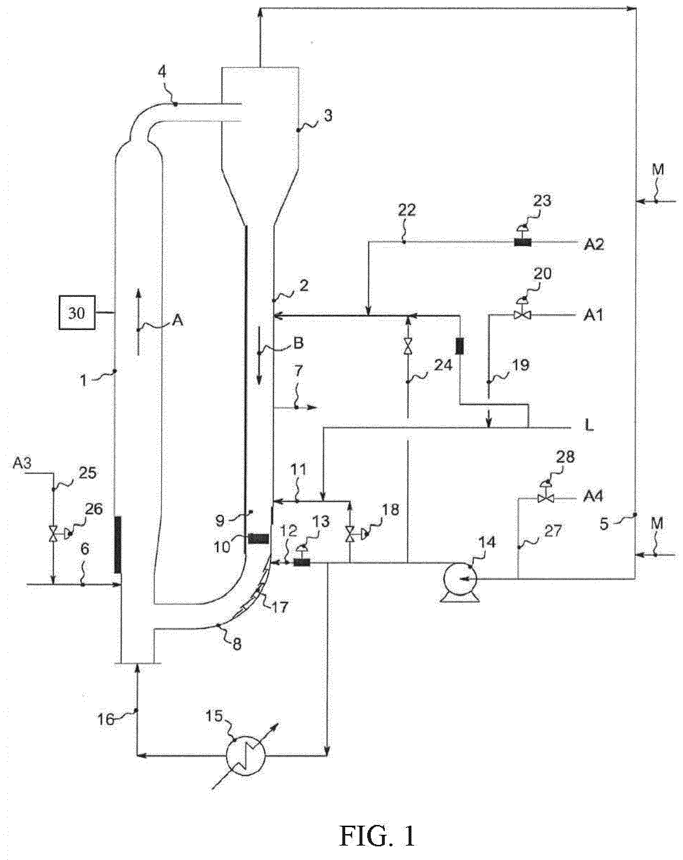

The gas phase polymerization reactor having two interconnected polymerization zones (riser and downcomer) will now be described in detail with reference to the enclosed FIG. 1, which is a diagrammatic representation and has to be considered illustrative and not limitative of the scope of the invention.

The polymerization reactor shown in FIG. 1 comprises a first polymerization zone 1 (riser), wherein the polymer particles flow upward under fast fluidization conditions along the direction of the arrow A and a second polymerization zone 2 (downcomer), wherein the polymer particles flow downward under the action of gravity along the direction of the arrow B.

The upper portion of the riser 1 is connected to a solid/gas separator 3 by the interconnection section 4. The separator 3 removes most of the unreacted monomers from the polymer particles and the polymer withdrawn from the bottom of separator 3 enters the top portion of the downcomer 2. The separated unreacted monomers, optionally together with polymerization diluents, such as propane, flow up to the top of separator 3 and are successively recycled to the bottom of the riser 1 via the recycle line 5.

A mixture comprising one or more olefin monomers, hydrogen as the molecular weight regulator, propane as the polymerization diluent, is fed to the polymerization reactor via one or more lines M, which are suitably placed along the gas recycle line 5, according to the knowledge of the person skilled in art.

The catalyst components, preferably after a prepolymerization step, are continuously introduced into the riser 1 via line 6. The produced polymer can be discharged from the reactor via a line 7, which can be placed on the lower portion of the downcomer 2 so that, due to the packed flow of densified polymer, the quantity of gas entrained with the discharged polymer is minimised. By inserting a control valve (not shown in FIG.1) on the polymer discharge line 7, it becomes possible to continuously control the flow rate of polymer produced by the polymerization reactor. Additional polymer discharge lines with respect to line 7 can conveniently be placed in the bottom part of the downcomer

The polymerization reactor further comprises a transport section 8 connecting the bottom of downcomer 2 with the lower region of the riser 1. The bottom of the downcomer 2 converges into a slight restriction 9. A control valve 10 with an adjustable opening is conveniently placed within the restriction 9. The flow rate Fp of polymer continuously circulated between the downcomer 2 and the riser 1 is adjusted by the level of opening of the control valve 10. The control valve 10 may be a mechanical valve, such as a butterfly valve, a ball valve, etc. A stream of dosing gas is fed into the lower part of the downcomer 2 by means of a line 11 placed at a short distance above the restriction 9. The dosing gas to be introduced through line 10 is conveniently taken from the recycle line 5. In synthesis, the flow Fp of polymer particles circulated between downcomer 2 and riser 1 is conveniently adjusted by varying the opening of the control valve 10 at the bottom of the downcomer and/or by varying the flow rate of the dosing gas entering the downcomer via line 11. The flow rate of dosing gas is adjusted by means of a control valve 18, which is suitably arranged on line 11. The flow rate of dosing gas is adjusted by means of a control valve 18, which is suitably arranged on line 11.

The transport section 8 is designed as a bend descending from the bottom of downcomer 2 up to the lower region of the riser 1. Furthermore, a carrier gas is introduced via line 12 at the inlet of the transport section 8. The flow rate of carrier gas is adjusted by means of a control valve 13, which is suitably arranged on line 12.

Also the carrier gas is taken from the gas recycle line 5. Specifically, the gas recycle stream of line 5 is first subjected to compression by means of a compressor 14 and only a minor percentage of the recycle stream passes through line 12, thus entering the transport section 8 and diluting the solid phase of polymer flowing through the transport section 8. Most of the recycle stream, downstream the compressor 14, is subjected to cooling in a heat exchanger 15 and successively is introduced via line 16 at the bottom of the riser 1 at a high velocity, such to ensure fast fluidization conditions in the polymer bed flowing along the riser 1.

The carrier gas merges with the densified polymer coming from downcomer 2 at the inlet portion of transport section 8, after exiting the slits of the gas distribution grid 17. In the embodiment shown in FIG.1 the top end of the distribution grid 17 is coincident with the inlet of the transport section 8 and the distribution grid 17 extends along the bending of the transport section 8 for an angle α=60°. The gas distribution grid 17 is formed by a plurality of trays fixed to the transport section 8 in a way to form slits in the overlapping area of adjacent trays.

According to an embodiment, an ester of a fatty acid as defined above and exploiting the function of an antistatic agent A is metered into the reactor via feed line 11. A flow rate A1 of such antistatic agent is metered via line 19 by valve 20 and then dispersed into a suitable flow rate of liquid monomer L to obtain a more homogeneous distribution. Such dispersion is then pre-mixed with the dosing gas and thence fed into the downcomer.

As described in WO 2011/029735, the antistatic agent can additionally be metered to one or more positions along the height of the downcomer via suitable nozzles. In such a case, the antistatic agent flow rate A2 in line 22 is metered by one or more suitable valves 23 and then pre-dispersed either in the liquid monomer L as described above, or alternatively in a fraction of recycle gas taken from recycle line 5 via line 24.

Furthermore, as also described in WO 2011/029735, additional flow rates of antistatic agent may be fed into the reactor at the bottom of the riser (flow rate A3, line 25 metered by valve 26) or into the main gas recycle line 5 (flow rate A4, line 27 metered by valve 28).

The carrier gas merges with the densified polymer coming from downcomer 2 at the inlet portion of transport section 8, after exiting the slits of a gas distribution grid 17. In the embodiment shown in Fig. 1 the top end of the distribution grid 17 is coincident with the inlet of the transport section 8 and the distribution grid 17 extends along the bending of the transport section 8 for an angle of 60°. The gas distribution grid 17 is formed by a plurality of trays fixed to the transport section 8 in a way to form slits in the overlapping area of adjacent trays. A detailed description of the gas distribution grid 17 can be found in WO 2012/031986.

An additional flow rate of antistatic agent can suitably be metered through line 12.

One or more electrostatic probe(s) 30 is/are mounted on the riser 1, with the tip of the probe protruding into the reactor to be in contact with the polymer particles. The probe(s) can be positioned at any position of the riser, FIG.1 shows one of the possible positions.

Depending on the olefin (co)polymer to be produced, the polymerization reactor can be operated by properly adjusting the polymerization conditions and the monomers concentration in the riser and in the downcomer, so as to produce a wide variety of bimodal homopolymers and random copolymers. To this purpose, the gas mixture entraining the polymer particles and coming from the riser can be partially or totally prevented from entering the downcomer, so as to polymerize two different monomers compositions in the riser and the downcomer. This effect may be achieved by feeding a gaseous and/or a liquid barrier stream through a line placed in the upper portion of the downcomer. The barrier stream should have a suitable composition, different from the gas composition present inside the riser. The flow rate of the barrier stream can be adjusted, so that an upward flow of gas counter-current to the flow of the polymer particles is generated, particularly at the top of the downcomer, thus acting as a barrier to the gas mixture coming from the riser. For further details regarding this barrier effect at the top of the downcomer, reference is made to the disclosure of EP 1012195 A1.

The invention is useful in any exothermic polymerization reaction employing any catalyst, whether it is supported or unsupported, and regardless of whether it is in pre-polymerized form.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of Elements. In particular, the transition metal compound can be selected among compounds of Ti, V, Zr, Cr, and Hf. Preferred compounds are those of formula Ti(OR)nXy-n in which n is comprised between 0 and y; y is the valence of titanium; X is halogen and R is a hydrocarbon group having 1-10 carbon atoms or a COR group. Among those compounds, particularly preferred are titanium compounds having at least one Ti-halogen bond such as titanium tetrahalides or halogenalcoholates.

Preferred specific titanium compounds are TiCl₃, TiC₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as A1Et₂Cl and AhEt₃Cl₃ optionally in mixture with the trialkyl aluminum compounds.

Particularly suitable high yield Ziegler-Natta catalysts are those wherein the titanium compound is supported on magnesium halide in active form, which is preferably MgCl₂ in active form.

Particularly for the preparation of crystalline polymers of CH₂CHR olefins, where R is a C₁-C₁₀ hydrocarbon group, internal electron donor compounds can be supported on MgCl₂. Internal electron donor compounds can be selected among esters, ethers, amines, and ketones. In particular, the use of compounds belonging to 1,3-diethers, cyclic ethers, phthalates, benzoates, acetates and succinates is preferred.

When it is desired to obtain a highly isotactic crystalline polypropylene, it is advisable to use, besides the electron-donor present in the solid catalytic component, an external electron-donor (ED) added to the aluminum alkyl co-catalyst component or to the polymerization reactor.

These external electron donors can be selected among alcohols, glycols, esters, ketones, amines, amides, nitriles, alkoxysilanes and ethers.

The electron donor compounds (ED) can be used alone or in mixture with each other. Preferably the ED compound is selected among aliphatic ethers, esters and alkoxysilanes. Preferred ethers are the C₂-C₂₀ aliphatic ethers and in particular the cyclic ethers preferably having 3-5 carbon atoms, such as tetrahydrofurane (THF), dioxane. Preferred esters are the alkyl esters of C₁-C₂₀ aliphatic carboxylic acids and in particular C₁-C₈ alkyl esters of aliphatic mono carboxylic acids such as ethylacetate, methyl formiate, ethylformiate, methylacetate, propylacetate, i-propylacetate, n-butylacetate, i-butylacetate.
a. The preferred alkoxysilanes are of formula Ra¹Rb²Si(OR³)c, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl.

Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, magnesium chloride. Suitable vanadium compounds are VCl₄, VCl₃, VOCl₃, vanadium acetyl acetonate.

Other useful catalysts are those based on chromium compounds, such as chromium oxide on silica, also known as Phillips catalysts.

Still other useful catalysts are single site catalysts, for instance metallocene-based catalyst systems, which comprise:
- at least a transition metal compound containing at least one π bond;
- at least an alumoxane or a compound able to form an alkylmetallocene cation; and optionally an organo-aluminum compound.

A preferred class of metal compounds containing at least one π bond are metallocene compounds belonging to the following formula (I):

Cp(L)_{q}AMXₚ (I)

wherein M is a transition metal belonging to group 4, 5 or to the lanthanide or actinide groups of the Periodic Table of the Elements; preferably M is zirconium, titanium or hafnium; the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a hydrocarbon radical containing from 1 to 40 carbon atoms; preferably, the substituents X are selected from the group consisting of -Cl, -Br, -Me, -Et, -n-Bu, -sec-Bu, -Ph, -Bz, - CH₂SiMe₃, -OEt, -OPr, -OBu, -OBz and -NMe₂;
p is an integer equal to the oxidation state of the metal M minus 2;
n is 0 or 1; when n is 0 the bridge L is not present;
L is a divalent hydrocarbon moiety containing from 1 to 40 carbon atoms, optionally containing up to 5 silicon atoms, bridging Cp and A, preferably L is a divalent group (ZR⁷₂)ₙ;
Z being C, Si, and the R⁷ groups, equal to or different from each other, being hydrogen or a hydrocarbon radical containing from 1 to 40 carbon atoms;
more preferably L is selected from Si(CH₃)₂, SiPh₂, SiPhMe, SiMe(SiMe₃), CH₂, (CH₂)₂, (CH₂)₃ or C(CH₃)₂;
Cp is a substituted or unsubstituted cyclopentadienyl group, optionally condensed to one or more substituted or unsubstituted, saturated, unsaturated or aromatic rings;

A has the same meaning of Cp or it is a NR⁷, -0, S, moiety wherein R⁷ is a hydrocarbon radical containing from 1 to 40 carbon atoms.
Alumoxanes used as component b) are considered to be linear, branched or cyclic compounds containing at least one group of the type: 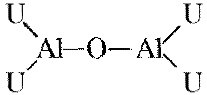 wherein the substituents U, same or different, are defined below.

In particular, alumoxanes of the formula: 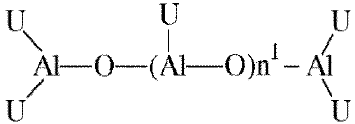 can be used in the case of linear compounds, wherein n 1 is 0 or an integer of from 1 to 40 and where the U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or C₇C₂₀-arylalkyl radicals, optionally containing silicon or germanium atoms, with the proviso that at least one U is different from halogen, and j ranges from 0 to 1, being also a non-integer number; or alumoxanes of the formula: 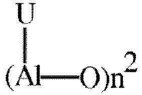 can be used in the case of cyclic compounds, wherein n² is an integer from 2 to 40 and the U substituents are defined as above.

The catalyst may suitably be employed in the form of a pre-polymer powder prepared beforehand during a pre-polymerization stage with the aid of a catalyst as described above. The pre-polymerization may be carried out by any suitable process, for example, polymerization in a liquid hydrocarbon diluent or in the gas phase using a batch process, a semi -continuous process or a continuous process.

The polymerization process of the invention allows the preparation of a large number of polyolefins. Examples of polyolefins that can be obtained are:
- high-density polyethylene (HDPE having relative densities higher than 0.940), including ethylene homopolymers and ethylene copolymers with a-olefins having 3 to 12 carbon atoms;
- linear polyethylene of low density (LLDPE having relative densities lower than 0.940) and of very low density and ultra-low density (VLDPE and ULDPE having relative densities lower than 0.920 down to 0.880) consisting of ethylene copolymers with one or more a-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other a-olefins having a content of units derived from propylene of more than 85% by weight;
- isotactic copolymers of propylene and a-olefins, such as 1-butene, with an a-olefin content of up to 30% by weight;
- impact-resistant propylene polymers obtained by sequential polymerization of propylene and mixtures of propylene with ethylene containing up to 30% by weight of ethylene;
- atactic polypropylene and amorphous copolymers of propylene and ethylene and/or other a-olefins containing more than 70% by weight of units derived from propylene.

### EXAMPLES

### Test Methods

The characterization data for the olefin polymers were obtained according to the following methods:
Melt flow rate (MFR) - determined according to ISO 1133.
Ethylene content in propylene-based copolymers - determined by IR spectroscopy.
Xylene Solubles (XS) - determined as follows: 2.5 g of polymer and 250 ml of xylene are introduced in a glass flask equipped with a refrigerator and a magnetical stirrer. The temperature is raised in 30 minutes up to the boiling point of the solvent. The clear solution so obtained is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept in an oven at 80° C under vacuum until constant weight is obtained. The weight percentage of polymer soluble in xylene at room temperature is then calculated.

### Example 1

The polymerization process was carried out under continuous conditions in a pilot plant comprising a gas-phase polymerization reactor having interconnected polymerization zones, as shown in FIG. 1. A signal recorder connected to the electrostatic probe 30 allowed to detect the variation of the electrostatic potential of the polymer particles from a time 0, at which no antistatic agent (or standard antistatic) was present in the reactor, to several minutes after the introduction of the antistatic agent, as reported in Table 1 below.

A Ziegler-Natta catalyst was used comprising:
- a titanium solid catalyst component prepared with the procedure described in EP 728 769, Example 5, lines 46 to 53, according to which di-isobutyl phthalate is used as an internal donor compound;
- triethylaluminium (TEAL) as a cocatalyst;
- dicyclopentyldimethoxysilane as an external donor.

The above catalyst components were pre-contacted in a pre-activation vessel at a temperature of 15°C for 10 minutes with a weight ratio TEAL/(solid catalyst component) of 4 and a weight ratio TEAL/(external donor) of 4.

The thus activated catalyst was fed to the gas-phase polymerization reactor, where propylene was polymerized with ethylene using H₂ as molecular weight regulator and propane as an inert polymerization diluent. The polymerization was carried out at a temperature of 75°C and at a pressure of 28 bar.

Sorbitan laurate was suspended in hexane at the concentration of 10 % by weight. The suspension was introduced and metered into the reactor at several locations in amount of 250 ppm per kg/h of polymer produced. With reference to FIG. 1, about 32% of the antistatic agent was metered into the lower part of the downcomer via line 11 (flow A1), while the remainder 68% was metered via lines 22, 25 and 27 (flows A2, A3 and A4).

Sorbitan laurate proved to be an effective antistatic agent since the electrostatic probe recorded a variation of the signal upon its introduction, as reported in Table 1 below. Also, visual inspection of the solid/gas separator 3 showed that the walls were clean, namely there was no formation of sheeting or adhesion of polymer particles to the walls.

The addition of sorbitan laurate ensured a very stable operation of the plant for the duration of the trial, as evidenced by the absence of problems at the reactor discharge, and as highlighted by stable and normal values of the temperatures detected on the outside reactor walls at the bottom of the downcomer, ranging from 91.8 to 96°C. Also, the presence of the antistatic agent did not negatively affected the catalyst activity.

The obtained copolymer had MFR of 10.5 g/10', ethylene comonomer content of 3.2 % by weight and Xylene Solubles of 5.5 % by weight.

### Example 2 (Comparative)

Example 1 was repeated with the only difference that the antistatic agent used was the commercial ethoxylated alkyl amine Atmer 163®. Also in this case, the electrostatic probe recorded a variation of the signal upon its introduction, as reported in Table 1 below. The reactor was clean and no sheeting of the walls was detected. This compound, however, restricts the field of use of the polymer produced, since it cannot be used for medical applications.

### Example 3 (Comparative)

Example 1 was repeated with the only difference that the antistatic agent used was the commercial glycerol monostearate GMS 90®. The electrostatic probe recorded a small variation of the signal from the base line upon introduction of this compound in the reactor, as reported in Table 1 below. This is a sign of a limited capability to dissipate electrostatic charges.

### Example 4

The propylene-ethylene copolymer produced in Example 1, to which additional sorbitan laurate was added up to a final content of 500 ppm, was extruded in a laboratory twin screws extruder Leistritz 27 mm with after stabilization with an additive package having the formulation reported below:
- 500 ppm of pentaerythritol tetrakis (3-(3,5-di-tert-butyl-4-hydroxyphenyl) propionate);
- 500 ppm of calcium stearate;
- 1000 ppm of tris (2,4 di-tert-buthylphenyl) phosphite.

Two extrusion temperatures were tested: 235°C and 275°C.

Some tests were performed during the polymer extrusion to detect the possible formation of particular smell related to the presence of sorbitan laurate. Chemicals were adsorbed in special cartridges in two point of the extrusion line.

HPLC analyses were carried out after chemical desorption of the sampled cartridges. HPLC analyses were carried out also on headspace of bags containing polymer pellets collected at the exit of the extruder, and immediately aluminated and sealed. The analyses were performed the day after the extrusion and one week later.

Acrolein, that as reported in previous papers is one of the most smelling and toxic substances, was not generated during polymer extrusion at both tested temperatures. Therefore the copolymer of Example 1 could be extruded without the formation of any detectable amount of acrolein or other undesired substance such as aldehydes.

### Example 5 (Comparative)

The propylene-ethylene copolymer produced in Example 3 was extruded at the same conditions described in Example 4. The release of irritant smell due to the formation of acrolein was detected.

**Table 1**

| **Example** | **1** | **2 (Comp.)** | **3 (Comp.)** |
|---|---|---|---|
| Antistatic agent | Sorbitan laurate | Atmer 163® | GMS 90® |
| Δ signal after 10 minutes (kV) | 20.1 | 21.9 | 1.2 |
| Acrolein detected | NO | n.a. | YES |

| | | | |
|---|---|---|---|
| n.a. = not available | | | |

## Claims

1. Process for producing olefin polymers comprising the steps of:
a) polymerizing one or more olefins in the presence of an olefin polymerization catalyst in a gas phase reactor comprising a densified bed polymerization zone;
b) introducing into the reactor an antistatic agent being an ester of a fatty acid with a polyol selected from the group consisting of erythritan, threitan, sorbitan,
wherein the gas phase reactor has interconnected polymerization zones, wherein the growing polymer particles flow through a first polymerization zone under fast fluidization or transport conditions and enter a second polymerization zone through which the growing polymer particles flow in a densified form under the action of gravity, thus establishing a circulation of polymer between the first and second polymerization zone.

2. Process according to claim 1 **characterized in that** the antistatic agent is the ester of a saturated fatty acid with sorbitan.

3. Process according to claims 1 and 2 **characterized in that** the antistatic agent is the monoester of a saturated fatty acid sorbitan.

4. Process according to claim 3 **characterized in that** the antistatic agent is sorbitan monolaurate.

5. Process according to claim 1, **characterized in that** the ester of a fatty acid with the polyol is introduced into the reactor diluted in a hydrocarbon solvent or diluent.

6. Process according to claim 1, **characterized in that** the ester of a fatty acid with the polyol is introduced in into the densified bed of downward-flowing polymer particles of the reactor at points located at different height.

7. Process according to claim 1, **characterized in that** the ester of a fatty acid with the polyol is introduced into the first polymerization zone of the reactor having interconnected polymerization zones.

8. Process according to claim 1, **characterized in that** the ester of a fatty acid with the polyol is introduced into the reactor in an amount of from 5 to 1000 ppm with respect to the weight of the polymer produced.

9. Process according to claim 5, **characterized in that** the ester of a fatty acid with the polyol is diluted in the hydrocarbon solvent or diluent at a concentration of from 1 to 10 % by weight.

10. Process according to claim 5, **characterized in that** the hydrocarbon solvent or diluent is selected from the group consisting of isopentane, isohexane, n-hexane, cyclohexane, heptane.

## Patentansprüche

1. Verfahren zur Herstellung von Olefinpolymeren, umfassend die Schritte:
a) Polymerisieren von einem oder mehreren Olefinen in Anwesenheit eines Olefinpolymerisationskatalysators in einem Gasphasenreaktor, der eine Polymerisationszone mit verdichtetem Bett umfasst;
b) Einbringen eines Antistatikmittels in den Reaktor, welches ein Ester einer Fettsäure mit einem Polyol ausgewählt aus der Gruppe bestehend aus Erythritan (1,4-Anhydroerythritol), Threitan (1,4-Anhydrothreitol), Sorbitan (Sorbitanhydrid) ist,
wobei der Gasphasenreaktor miteinander verbundene Polymerisationszonen aufweist, wobei die wachsenden Polymerpartikel unter raschen Fluidisierungs- oder Transportbedingungen durch eine erste Polymerisationszone fließen und in eine zweite Polymerisationszone eintreten, durch welche die wachsenden Polymerpartikel in einer verdichteten Form unter Einwirkung der Schwerkraft fließen, wodurch eine Zirkulation von Polymer zwischen der ersten und der zweiten Polymerisationszone hergestellt wird.

2. Verfahren nach Anspruch 1, **dadurch gekennzeichnet, dass** das Antistatikmittel der Ester einer gesättigten Fettsäure mit Sorbitan ist.

3. Verfahren nach den Ansprüchen 1 und 2, **dadurch gekennzeichnet, dass** das Antistatikmittel der Monoester einer gesättigten Fettsäure mit Sorbitan ist.

4. Verfahren nach Anspruch 3, **dadurch gekennzeichnet, dass** das Antistatikmittel Sorbitanmonolaurat ist.

5. Verfahren nach Anspruch 1, **dadurch gekennzeichnet, dass** der Ester einer Fettsäure mit dem Polyol mit einem Kohlenwasserstofflösungsmittel oder -verdünnungsmittel verdünnt in den Reaktor eingebracht wird.

6. Verfahren nach Anspruch 1, **dadurch gekennzeichnet, dass** der Ester einer Fettsäure mit dem Polyol in das verdichtete Bett der abwärts fließenden Polymerpartikel des Reaktors an Punkten eingebracht wird, die sich in unterschiedlicher Höhe befinden.

7. Verfahren nach Anspruch 1, **dadurch gekennzeichnet, dass** der Ester einer Fettsäure mit dem Polyol in die erste Polymerisationszone des Reaktors mit miteinander verbundenen Polymerisationszonen eingebracht wird.

8. Verfahren nach Anspruch 1, **dadurch gekennzeichnet, dass** der Ester einer Fettsäure mit dem Polyol in einer Menge von 5 bis 1000 ppm in Bezug auf das Gewicht des produzierten Polymers in den Reaktor eingebracht wird.

9. Verfahren nach Anspruch 5, **dadurch gekennzeichnet, dass** der Ester einer Fettsäure mit dem Polyol in dem Kohlenwasserstofflösungsmittel oder -verdünnungsmittel auf eine Konzentration von 1 bis 10 Gew.% verdünnt ist.

10. Verfahren nach Anspruch 5, **dadurch gekennzeichnet, dass** das Kohlenwasserstofflösungsmittel oder -verdünnungsmittel ausgewählt ist aus der Gruppe bestehend aus Isopentan, Isohexan, n-Hexan, Cyclohexan, Heptan.

## Revendications

1. Procédé pour la production de polymères d'oléfines comprenant les étapes consistant à :
a) polymériser une ou plusieurs oléfines en présence d'un catalyseur de polymérisation d'oléfine dans un réacteur en phase gazeuse comprenant une zone de polymérisation à lit densifié ;
b) introduire dans le réacteur un agent antistatique qui est un ester d'un acide gras avec un polyol choisi dans le groupe constitué par l'érythritane, le thréitane, le sorbitane,
le réacteur en phase gazeuse ayant des zones de polymérisation interconnectées, les particules de polymère en croissance s'écoulant à travers une première zone de polymérisation dans des conditions de fluidisation ou de transport rapides et entrant dans une seconde zone de polymérisation à travers laquelle les particules de polymère en croissance s'écoulent sous une forme densifiée sous l'action de la gravité, établissant ainsi une circulation de polymère entre la première et la seconde zone de polymérisation.

2. Procédé selon la revendication 1 **caractérisé en ce que** l'agent antistatique est l'ester d'un acide gras saturé avec du sorbitane.

3. Procédé selon les revendications 1 et 2 **caractérisé en ce que** l'agent antistatique est le monoester d'un acide gras saturé avec du sorbitane.

4. Procédé selon la revendication 3 **caractérisé en ce que** l'agent antistatique est le monolaurate de sorbitane.

5. Procédé selon la revendication 1, **caractérisé en ce que** l'ester d'un acide gras avec le polyol est introduit dans le réacteur dilué dans un diluant ou solvant hydrocarboné.

6. Procédé selon la revendication 1, **caractérisé en ce que** l'ester d'un acide gras avec le polyol est introduit dans le lit densifié de particules de polymère s'écoulant vers le bas du réacteur à des points situés à différentes hauteurs.

7. Procédé selon la revendication 1, **caractérisé en ce que** l'ester d'un acide gras avec le polyol est introduit dans la première zone de polymérisation du réacteur ayant des zones de polymérisation interconnectées.

8. Procédé selon la revendication 1, **caractérisé en ce que** l'ester d'un acide gras avec le polyol est introduit dans le réacteur dans une quantité de 5 à 1 000 ppm par rapport au poids du polymère produit.

9. Procédé selon la revendication 5, **caractérisé en ce que** l'ester d'un acide gras avec le polyol est dilué dans le diluant ou solvant hydrocarboné à une concentration de 1 à 10 % en poids.

10. Procédé selon la revendication 5, **caractérisé en ce que** le diluant ou solvant hydrocarboné est choisi dans le groupe constitué par l'isopentane, l'isohexane, le n-hexane, le cyclohexane, l'heptane.
